**Europäisches Patentamt**

(19) **European Patent Office**

**Office européen des brevets**

(11) Publication number : **0 431 916 B1**

## (12) EUROPEAN PATENT SPECIFICATION

(45) Date of publication of patent specification :
18.05.94 Bulletin 94/20

(51) Int. Cl.⁵ : **B29C 67/14**

(21) Application number : **90313192.8**

(22) Date of filing : **05.12.90**

(54) **Method for laying down tapes.**

(30) Priority : **06.12.89 US 446771**

(43) Date of publication of application :
**12.06.91 Bulletin 91/24**

(45) Publication of the grant of the patent :
**18.05.94 Bulletin 94/20**

(84) Designated Contracting States :
**AT BE CH DE DK ES FR GB GR IT LI LU NL SE**

(56) References cited :
**EP-A- 0 167 377**
**US-A- 4 491 493**
**US-A- 4 759 985**
**COMPOSITES, vol. 27, no. 4, 1987, pages
36-39, P.R. Godwin, C.S. Breakspear, "Le
développement des techniques de stratifi-
cation pour la production de nouvelles pales
d'hélicoptère."**

(73) Proprietor : **E.I. DU PONT DE NEMOURS AND
COMPANY
1007 Market Street
Wilmington Delaware 19898 (US)**

(72) Inventor : **Driver, Howard Daniel
3242 Champions Drive
Wilmington, Delaware 19808 (US)**
Inventor : **Gruber, Mark Brian
5 Yeager Lane
Landenberg, Pennsylvania 19350 (US)**
Inventor : **Phillips, Walter Alan
8102 Camino Tranquilo
San Diego, California 92122 (US)**

(74) Representative : **Jones, Alan John et al
CARPMAELS & RANSFORD 43 Bloomsbury
Square
London, WC1A 2RA (GB)**

## Description

### Background

This invention relates to laying down tape on a work surface and, more particularly, to controlling the tape during laydown.

Automatic tape laydown of continuous filament/thermosetting resin tape has been the method of choice for building up large flat structures. It has shown flexibility in part manufacturing and cost savings over hand layup. Two major problems are controlling the tape during laydown and laying tape into a contoured shape.

The first problem of control of the tape during laydown is caused by several things. When tape is manufactured, it sometimes has a natural bias. This means if the tape is unrolled it will not lay in a straight line but laydown with a slight curve. This is due to variations in tension of the tows during impregnation. The problem this causes during laydown is that the tape machine is trying to go straight and the tape is trying to turn. This causes either buckling of the tape along the edges or the tape tries to ride out of the guiding system. This loss of control of the tape during laydown typically causes voids in the lamina and it must be removed.

Since continuous filament prepreg tape cannot stretch, most parts must be made on a flat mold. This creates the second problem which is complex parts are difficult to manufacture with tape equipment using continuous filament prepreg tape. Today the only way contoured parts can be tape laid is using the natural path. In this method, the contour of the mold must be mathematically modeled. A computer then determines a natural path (a path normal to the surface of the mold) across the contour. This is the path that the tape wants to be applied without buckling. Unfortunately, there is only one solution and that may not be the optimum tape configuration. This restricts the design flexibility by limiting the fiber orientation of the part.

These two problems create a need in the tape laying industry for a method using a tape which can be controlled during laydown, can be laid in a contour mold and is not resticted to natural path, i.e. the tape must be made steerable without buckling.

### Summary of the Invention

A method for laying an elongated tape of finite width composed of a matrix of a synthetic organic polymer resin reinforced with ordered staple fibers (substantially aligned discontinuous fibers) in a deviate path on a surface includes the steps of advancing the tape toward the surface from a source, pressing said tape on said surface, guiding said tape in said path during the pressing step during relative movement between said tape and said surface, heating said tape prior to the pressing step, and drawing said fibers by applying sufficient tension to the tape between the source and the pressing step to maintain said fibers in tension across the width of the tape as the tape is guided in said path.

### Brief Description of the Drawings

Fig. 1 is a perspective schematic illustration of a tape-laying head for practicing the invention.

Fig. 2 is a schematic side view of Fig. 1.

Figs. 3 and 4 are schematic illustrations representative of desirable and undesirable tension distributions, respectively, across the width of a tape during tape laydown.

### Detailed Description of the Illustrated Embodiment

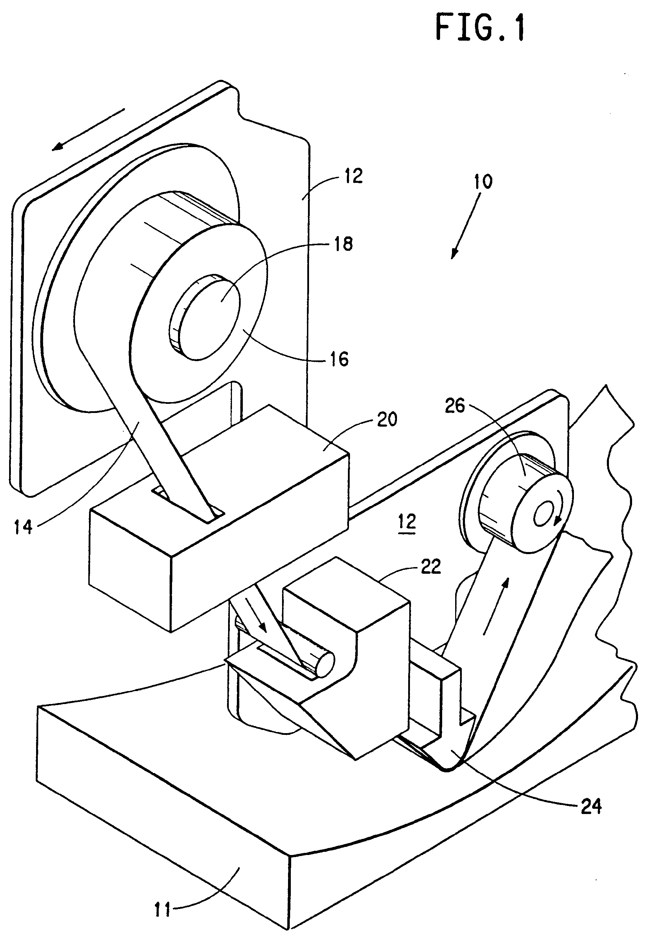

In Fig. 1 of the drawing the tape-laying head has been designated generally by the numeral 10 and includes a frame 12 on which is mounted a roll 16 of fiber reinforced resin tape 14. Roll 16 is mounted on a rotatable mandrel 18 equipped with a magnetic clutch (not shown). A cutter 20, a heater 22, a pressure foot 24 and a driven take-up roll 26 for the backing paper of the tape are also mounted to frame 12. Pressure foot 24 may be in the form of a shoe, as shown, or a rotatable roller. Frame 12 is mounted for relative movement with respect to a work surface 11. The head 10 can be moved manually or by a manipulator attached to frame 12.

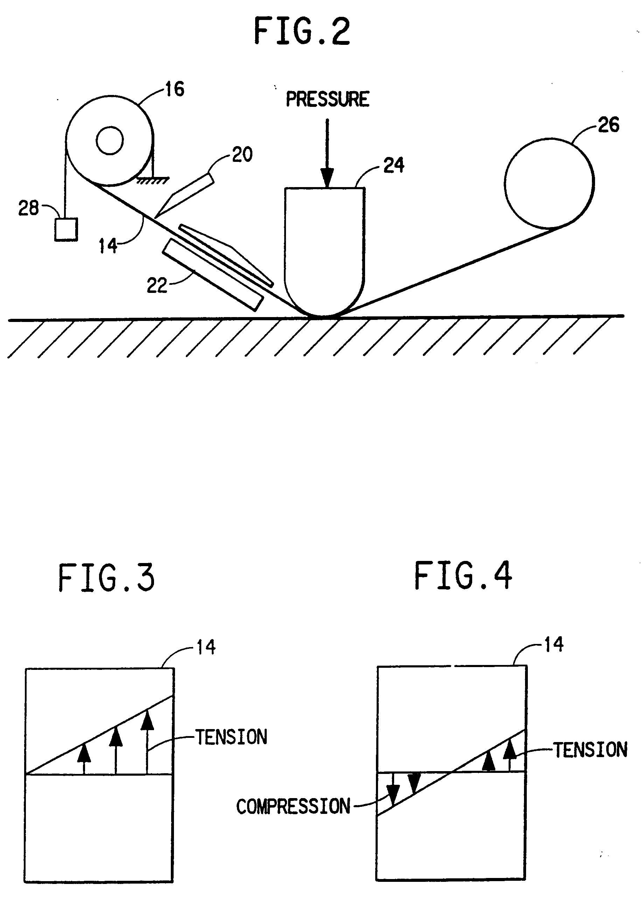

As frame 12 is moved, a fiber reinforced synthetic organic polymer resin tape 14 is pulled from roll 16 on a mandrel 18 against a desired level of tension applied by a magnetic clutch incorporated in mandrel 18. In the schematic of Fig. 2 the device for applying back tension has been shown as a weight 28 on a strap brake. Tape 14 advances under tension past knife 20, through heater 22 and beneath pressure foot 24 which presses the advancing tape 14 on top of work surface 11 which will be the top of a partially built composite structure or, if the tape laid is the first of a structure, it is pressed against work surface 11 which has been coated with the resin used to make the tape.

In operation, a roll 16 of tape 14 is mounted on mandrel 18 and as it is unwound the tape follows a path past a knife 20 (to cut the tape at the end of a row) and into a hot air heating system 22 where heat is applied to the tape and to the laydown work surface just prior to the location of the pressure foot 24. The tape is pressed down onto the work surface using the pressure foot and the backing paper is pulled off the tape after laydown by take-up roll 26.

Preferably, the fiber reinforcement is a continuous filament fiber converted into short (1" to 3" long) fibers all oriented in substantially the same direction by stretch breaking (ordered staple) as disclosed in U.S. Patent No. 4,759,985. The stretch broken tow has filaments which are highly aligned, giving such a tow an advantage over continuous filament tow in that it can be drawn. A plurality of such tows are then guided into a prepreg machine which combines the reinforcing fibers with a synthetic organic polymer (12" lab style machine manufactured by California Graphite Machinery, Inc.). The tape is then slit into a precise width and wound onto a core. The fibers are preferably carbon, aramid or glass and suitable resins are thermoplastic resins, such as polyester or polyamides, thermosetting resins, such as phenolic vinyl ester, and epoxy. Polyimide polymer resins such as Avamid® K by E. I. du Pont de Nemours and Company are also suitable for use.

The following is important to the method for applying steerable tape without buckling the tape:

o Back tension - keeps the tape in tension and draws the tape as the head turns.

o Tape heating - tape is heated just prior to laydown. This reduces resin viscosity, thus reducing the load required to draw the tape.

o Pressing step - tape needs to be pressed down onto work surface to keep it from moving (it is then held by resin tack).

All of these conditions are important so that all of the fibers are in tension during laydown (Fig. 3). If back tension is not high enough or the tape is too cool, some of the fibers will go into compression during laydown (Fig. 4) and this causes buckling of the tape which is undesirable.

Example I

Tapes were prepared of ordered staple carbon fibers and epoxy resin and ordered staple aramid fiber and epoxy resin (934 Epoxy-Fiberite). The tapes were tested in radius tests. In the radius test tape is laid in continuously smaller radii until the inside edge of the tape begins to buckle. The test conditions and results for the radius tests for the various tapes are shown in the following tables. In each case 18 lbs. back tension was applied.

### Table I
### Ordered Staple Carbon Fiber/Epoxy

| Radius (In.) | Tape Temp. (°C) | Foot Pressure (Lbs.) | Observation |
|---|---|---|---|
| 2400 | 51 | 170 | Good |
| 1200 | 51 | 170 | Good |
| 800 | 51 | 170 | Good |
| 393 | 51 | 170 | Edge Wrinkle |
| 393 | 57 | 170 | Good |
| 300 | 57 | 170 | Edge Wrinkle |
| 300 | 63 | 170 | Good |
| 200 | 63 | 170 | Edge Wrinkle |

### Table II
### Ordered Staple Aramid Fiber/Epoxy

| Radius (In.) | Tape Temp. (°C) | Foot Pressure (Lbs.) | Observation |
|---|---|---|---|
| 200 | 51 | 170 | Good |
| 100 | 51 | 170 | Edge Wrinkle |
| 100 | 57 | 150 | Edge Wrinkle |

3

Example II

Ordered staple carbon fiber/polyimide (Avamid® K - E. I. du Pont de Nemours and Company) tape was tested in a mold laydown test. The mold laydown test is laying tape into a pocket mold and comparing how the material conforms to the shape of the mold and how much tape movement occurs after laydown. This mold had square pockets for pad-up areas. The ordered staple carbon fiber/polyimide tape was laid in the corner of the pocket and it did not lift off the surface of the mold. This is because the fibers can draw and stretch to make up for the needed extra projected area. Resin tape reinforced with continuous filaments cannot be laid in the corners of those pockets without the tape lifting off the surface of the mold. The continuous filament fibers will not allow the tape to conform to the corners.

## Claims

1. A method for laying an elongated tape of finite width in a deviate path on a surface, said process comprising: advancing the tape composed of a matrix of synthetic organic polymer resin reinforced with ordered staple fibers toward said surface from a source, pressing said tape on said surface, guiding said tape in said path during the pressing step during relative movement between said tape and said surface, heating said tape to reduce the viscosity of the resin prior to the pressing step, and drawing said fibers by applying sufficient tension to the tape between the source and the pressing step to maintain said fibers in tension across the width of the tape as the tape is guided in said path.

2. The method as defined in Claim 1 wherein said fibers are carbon fibers.

3. The method as defined in Claim 1 wherein said fibers are aramid fibers.

4. The method as defined in Claim 1 wherein said fibers are glass fibers.

5. The method as defined in Claim 1, 2, 3 or 4 wherein said resin is a thermosetting resin.

6. The method as defined in Claim 1, 2, 3 or 4 wherein said resin is a polyimide polymer resin.

7. The method as defined in Claim 1, 2, 3 or 4 wherein said resin is a thermoplastic resin.

## Patentansprüche

1. Verfahren zum Auflegen eines langgestreckten Bandes von begrenzter Länge in einem gekrümmten Weg auf einer Oberfläche, wobei das Verfahren umfaßt: Zuführung eines Bandes, bestehend aus einer Matrix aus synthetischem organischem, mit geordneten Stapelfasern verstärktem Polymerharz, von einem Ausgangspunkt zu der Oberfläche, Aufpressen des Bandes auf die Oberfläche, Führen des Bandes in dem Weg während des Aufdrückens während der relativen Bewegung zwischen dem Band und der Oberfläche, Aufheizen des Bandes zur Reduzierung der Viskosität des Harzes vor dem Aufpressen, und Ziehen der Fasern durch Aufbringen einer ausreichenden Spannung auf das Band zwischen dem Ausgangspunkt und der Aufpreßstufe, um die Fasern über die gesamte Breite des Bandes unter Spannung zu halten, während das Band in dem Weg geführt wird.

2. Verfahren nach Anspruch 1, worin die Fasern Kohlenstoffasern sind.

3. Verfahren nach Anspruch 1, worin die Fasern Aramidfasern sind.

4. Verfahren nach Anspruch 1, worin die Fasern Glasfasern sind.

5. Verfahren nach Anspruch 1, 2, 3 oder 4, worin das Harz ein wärmehärtbares Harz ist.

6. Verfahren nach Anspruch 1, 2, 3 oder 4, worin das Harz ein Polyimidpolymerharz ist.

7. Verfahren nach Anspruch 1, 2, 3 oder 4, worin das Harz ein thermoplastisches Harz ist.

**Revendications**

1. Un procédé de pose d'une bande allongée et de largeur finie selon un trajet dévié sur une surface, ledit procédé comprenant les étapes consistant:
   - à faire avancer la bande composée d'une matrice de résine synthétique polymère organique renforcée par des fibres à mèches ordonnées vers ladite surface à partir d'une source,
   - à presser ladite bande sur ladite surface,
   - à guider ladite bande sur ledit trajet pendant l'étape de pressage au cours du déplacement relatif entre ladite bande et ladite surface,
   - à chauffer ladite bande afin de réduire la viscosité de la résine avant l'étape de pressage, et
   - à tirer lesdites fibres en appliquant une traction suffisante à la bande entre la source et l'étape de pressage, pour maintenir lesdites fibres en traction sur toute la largeur de la bande lorsque la bande est guidée sur ledit trajet.

2. Le procédé selon la revendication 1, dans lequel les fibres sont des fibres de carbone.

3. Le procédé selon la revendication 1, dans lequel les fibres sont des fibres aramides.

4. Le procédé selon la revendication 1, dans lequel les fibres sont des fibres de verre.

5. Le procédé selon la revendication 1, 2, 3 ou 4, dans lequel ladite résine est une résine thermodurcissable.

6. Le procédé selon la revendication 1, 2, 3 ou 4, dans lequel ladite résine est une résine polymère polyimide.

7. Le procédé selon la revendication 1, 2, 3 ou 4, dans lequel ladite résine est une résine thermoplastique.

FIG.1

# FIG.2

# FIG.3

# FIG.4